# EUROPÄISCHE PATENTSCHRIFT

(11) **EP 0 985 867 B1**
(45) Veröffentlichungstag und Bekanntmachung des Hinweises auf die Patenterteilung: **12.03.2003**
(21) Anmeldenummer: 99112613.7
(22) Anmeldetag: 02.07.1999
(51) Int. Cl.: F16L 25/00, F16L 11/15

(54) **Kunststoff-Wellrohr und Kombination dieses Wellrohres mit einer Muffe**
Plastics corrugated tube and the combination of this tube with a sleeve
Tuyau ondulé en plastique et combinaison de ce tuyau avec un manchon

(30) Priorität: 08.09.1998 DE 19840892
(43) Veröffentlichungstag der Anmeldung: 15.03.2000
(73) Patentinhaber: Hegler, Ralph-Peter, Dr.-Ing., 97688 Bad Kissingen (DE)
(72) Erfinder: Hegler, Ralph-Peter, Dr.-Ing., 97688 Bad Kissingen (DE)
(74) Vertreter: Rau, Manfred, Dr. Dipl.-Ing.

(56) Entgegenhaltungen:
- DE-A- 19 510 968
- GB-A- 2 123 904
- US-A- 4 779 651
- US-A- 4 824 502
- US-A- 4 950 103

## Beschreibung

Die Erfindung betrifft ein Kunststoff-Wellrohr nach dem Oberbegriff des Anspruches 1 und eine Kombination dieses Kunststoff-Wellrohres mit einer Muffe nach dem Oberbegriff des Anspruches 6.

Ein derartiges Wellrohr und eine derartige Kombination mit einer Muffe sind aus der EP 0 012 166 B1 bekannt. Hierbei ist eine als Profildichtring ausgebildete Ringdichtung im Wellental zwischen zwei einander benachbarten Wellungen vorgesehen. Sie steht über die Außenwand-Abschnitte der benachbarten Wellungen vor und liegt nach der Herstellung einer Muffen-Verbindung zweier benachbarter Rohr-Abschnitte gegen eine Innenfläche der Muffe an. Die Dichtkraft entsteht primär durch Kompression der Ringdichtung zwischen der Innenfläche der Muffe und der Innenfläche des Wellentales, wobei sich die Ringdichtung zusätzlich an verschiedenen Stellen der Seitenwand-Abschnitte der benachbarten Wellungen abstützt. Bei größeren Nennweiten der Wellrohre werden derartige Ringdichtungen jedoch recht unhandlich und zudem recht teuer. Dies liegt insbesondere daran, daß mit zunehmenden Nennweiten der Wellrohre die Profilhöhe der Wellungen stark zunimmt, da hohe Anforderungen an die Rohrsteifigkeit gestellt werden. Daraus ergibt sich ein mit zunehmender Nennweite überproportional zunehmender Querschnitt der Ringdichtungen und damit eine entsprechend größere Masse der Ringdichtung.

Aus der EP 0 231 446 B1 ist es bekannt, ein Kunststoff-Wellrohr der gattungsgemäßen Art mit einer an einem Ende eines Rohr-Abschnittes einstückig angeformten Steck-Muffe zu versehen und mindestens einen Teil der Außenwand-Abschnitte der Wellungen mit gemeinsam mit dem jeweiligen Außenwand-Abschnitt radial elastisch nach innen verformbaren, ringförmigen Erhöhungen zu versehen, deren Außen-Durchmesser in unverformtem Zustand geringfügig größer ist als der Innen-Durchmesser der Steck-Muffe. Für viele Einsatzgebiete ist diese Ausgestaltung zufriedenstellend; nicht jede mediendichte Verbindung ist hiermit allerdings zuverlässig herstellbar.

Aus US 4,824,502 A ist ein Verfahren zum Herstellen eines Kunststoff-Wellrohres nach einem Wickelverfahren bekannt. Hierbei wird ein Innenrohr aus einem schraubenlinienförmig gewickelten Band hergestellt, wobei die einander überlappenden Abschnitte des Bandes miteinander verschweißt werden. Anschließend wird ebenfalls schraubenlinienförmig ein im Querschnitt trapezförmiges Kern-Band auf das Rohr gewickelt und hierüber wiederum ein Band gewickelt, das sich der Außenform des Kern-Bandes anschmiegt und jeweils zwischen zwei benachbarten Wicklungsabschnitten des Kern-Bandes mit dem Innenrohr verschweißt wird. Anschließend wird das Rohr im Bereich seiner Außenwand-Abschnitte der Wellung mittels eines schraubenlinienförmig verlaufenden Schlitzes aufgeschnitten, damit das Kern-Band herausgenommen werden kann. Danach wird über die Außenwand-Abschnitte der schraubenlinienförmig verlaufenden Wellung ein Kunststoffband gewickelt und mit den Außenwand-Abschnitten verschweißt, um den Schlitz wiederum zu verschließen.

Aus der US 4,950,103 A ist ein Kunststoff-Wellrohr, und zwar ein Verbund-Wellrohr der gattungsgemäßen Art bekannt, dessen Außenwand-Abschnitte mit Löchern versehen sind, durch die Wasser eintreten kann. Die Löcher sind so ausgestaltet, daß sie nicht durch Partikel verschlossen werden können.

Der Erfindung liegt die Aufgabe zugrunde, ein Kunststoff-Wellrohr der gattungsgemäßen Art so auszugestalten, daß auch bei größeren Nennweiten mit geringem Aufwand eine dichte Verbindung zu einer Muffe herstellbar ist.

Diese Aufgabe wird erfindungsgemäß durch die Merkmale im Kennzeichnungsteil des Anspruches 1 gelöst. Der Kern der Erfindung liegt darin, daß die Ringdichtung nicht - wie beim Stand der Technik - im Wellental zwischen zwei einander benachbarten Wellungen, sondern auf dem Außenwand-Abschnitt einer Wellung angeordnet wird. Sie muß dann nur noch den Ringspalt zwischen dem Außenwand-Abschnitt der jeweiligen Wellung und der Innenfläche einer Muffe ausfüllen und unter Kompression einerseits und elastischer Verformung andererseits abdichten. Dadurch werden - verglichen mit dem Stand der Technik - der Querschnitt und damit die Masse einer Ringdichtung drastisch reduziert. Dies senkt die Kosten und erleichtert die Handhabung. Als Muffen kommen sowohl Doppelsteckmuffen als auch inline angeformte Muffen als durch nachträgliches Aufweiten des Rohrendes erzeugte Muffen in Betracht.

Die Ansprüche 2 bis 5 geben vorteilhafte Ausgestaltungen des Wellrohres wieder.

Die Ansprüche 6 und 7 stellen die Kombination eines Wellrohres mit einer Muffe und der mindestens einen hierbei vorgesehenen Ringdichtung unter Schutz.

Weitere Merkmale, Vorteile und Einzelheiten der Erfindung ergeben sich aus der nachfolgenden Beschreibung eines Ausführungsbeispieles anhand der Zeichnung. Es zeigt
Fig. 1 einen Längsschnitt durch eine Muffenverbindung zweier Rohre und
Fig. 2 einen stark vergrößerten Teilschnitt aus Fig. 1.

Bei den in der Zeichnung dargestellten, miteinander verbundenen RohrAbschnitten 1, 2 handelt es sich um Verbund-Wellrohre. Sie bestehen jeweils aus einem durchgehend zylindrischen Innenrohr 3 und einem gewellten Außenrohr 4. Die Herstellung derartiger Rohre erfolgt in aus der DE 17 04 718 A (entspr. US-PS 3 677 676) bekannter Weise, wobei die Verbindung zwischen Innenrohr 3 und Außenrohr 4 durch Verschweißen dann erfolgt, wenn die am Ende des Herstellprozesses das Innenrohr 3 bzw. das Außenrohr 4 bildenden warmplastischen Schläuche aus Kunststoff hinter dem Spritzkopf eines Extruders zusammengeführt werden. Im Bereich zwischen zwei benachbarten Wellungen 5 des Außenrohres 4, also im Bereich eines Wellentales 6 sind das Innenrohr 3 und das Außenrohr 4 durch Verschweißen miteinander verbunden. Jede Wellung 5 hat - wie aus der Zeichnung hervorgeht - den Querschnitt eines sich nach außen leicht verjüngenden Trapezes, wobei dieser Trapez-Querschnitt außen durch einen im wesentlichen ringzylindrischen Außenwand-Abschnitt 7 und seitlich durch zwei Seitenwand-Abschnitte 8, 9 begrenzt wird, die - bezogen auf die Mittel-Längs-Achse 10 der Rohr-Abschnitte 1, 2 - radial nach außen aufeinanderzu geneigt sind. Die Basis des Trapezes wird durch das jeweilige Innenrohr 3 gebildet.

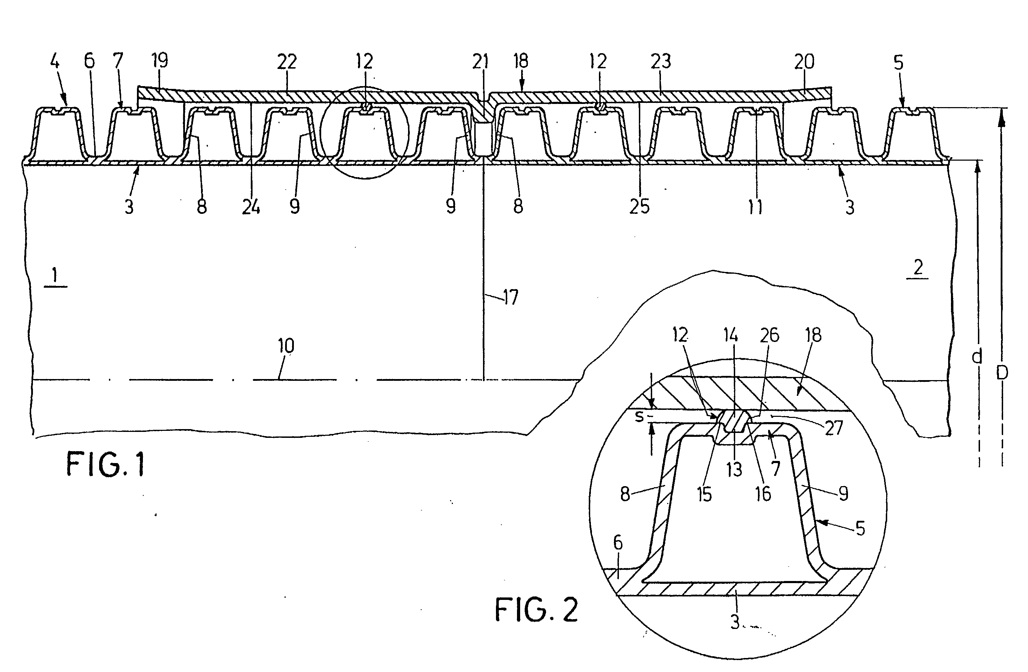

Im Außenwand-Abschnitt 7 ist jeweils mittig zwischen den beiden Seitenwand-Abschnitten 8, 9 eine nach innen eingewölbte Nut 11 ausgebildet, die sich kreisringförmig über den ganzen Umfang jeder Wellung 5 erstreckt. In dieser Nut kann - wie insbesondere aus Fig. 2 hervorgeht - eine Ringdichtung 12 angeordnet werden, die einen innenliegenden, im Querschnitt der Nut 11 angepaßten Haltesteg 13 aufweist. Der eigentliche Dichtungs-Abschnitt 14 hat in unverformtem Zustand einen etwa halbkreisförmigen Querschnitt und liegt beiderseits der Nut 11 mit Innen-Dichtflächen 15, 16 an dem Außenwand-Abschnitt 7 an. Die Dichtung zwischen Ringdichtung 12 und Wellung 5 erfolgt also mittels der Innen-Dichtflächen 15, 16 und mittels des zwischen diesen liegenden Haltestegs 13. Es kommen aber auch andere Dichtungsarten, wie z.B. einseitig wirkende Lippendichtungen, Mehrfachlippendichtungen oder dergleichen in Betracht.

Die beiden Rohr-Abschnitte 1, 2 sind jeweils im Bereich eines Wellentales 6 an einer Stoßfuge 17 stirnseitig und miteinander fluchtend gegeneinander gesetzt. Sie sind mittels einer sie aufnehmenden Doppel-Steck-Muffe 18 miteinander verbunden. Diese Doppel-Steck-Muffe 18 ist im wesentlichen ringzylindrisch ausgebildet und weist an ihren Enden sich erweiternde Einführ-Abschnitte 19, 20 auf. In ihrer Längsmitte weist sie einen radial zur Achse 10 nach innen vorspringenden Zentriersteg 21 auf, der zwischen den einander zugewandten Seitenwand-Abschnitten 8, 9 der Rohr-Abschnitte 1, 2 angeordnet ist. Die wesentliche Funktion dieses Zentriersteges 21 ist es, die Lage der Doppel-Steck-Muffe 18 nach dem Aufstecken auf nur einen Rohr-Abschnitt 1 öder 2 gegenüber diesem genau festzulegen. Die zwischen dem Zentriersteg 21 einerseits und den beiden Einführ-Abschnitten 19 bzw. 20 ausgebildeten Halte-, Zentrier- und Dicht-Abschnitte 22, 23 weisen jeweils eine im wesentlichen zylindrische Innenfläche 24, 25 auf. Beim Herstellen der Verbindung der beiden Rohr-Abschnitte 1, 2 durch die Muffe 18 wird die Außen-Dichtfläche 26 der Ringdichtung 12 elastisch verformt, wodurch eine Dichtung zwischen der Innenfläche 24 bzw. 25 der Muffe 18 und der Ringdichtung 12 erreicht wird. Die Ringdichtung 12 besteht in üblicher Weise aus einem elastisch nachgebenden handelsüblichen Dichtungsmaterial auf Gummi- bzw. Kunststoffbasis.

Für den Innendurchmesser d der Rohrabschnitte 1, 2 gilt: d ≥ 250 mm. Die Ringspaltweite s des Ringspalts 27 zwischen dem zylindrischen Außenwand-Abschnitt 7 und der Innenfläche 24 bzw. 25 der Muffe 18 kann sehr klein, beispielsweise kleiner als 0,5 mm sein. Für den Außendurchmesser D der Wellung gilt im Verhältnis zum Innendurchmesser d: 1,25 d > D ≥ 1,05 d.

## Patentansprüche

1. Kunststoff-Wellrohr, insbesondere Verbund-Wellrohr, dessen Außenwand mit einander benachbarten, kreisringförmigen Wellungen (5) versehen ist, die jeweils etwa den Querschnitt eines sich radial zur Mittel-Längs-Achse (10) verjüngenden Trapezes und hierzu einen etwa zylindrischen Außenwand-Abschnitt (7) und sich hieran anschließende Seitenwand-Abschnitte (8, 9) aufweisen,
**dadurch gekennzeichnet,**
**daß** in Außenwand-Abschnitten (7) jeweils mindestens eine als ringförmig umlaufende Nut (11) ausgebildete Aufnahme für eine Ringdichtung (12) ausgebildet ist.

2. Wellrohr nach Anspruch 1, **dadurch gekennzeichnet**
**daß** für den Innendurchmesser d des Wellrohres gilt: d ≥ 250 mm.

3. Wellrohr nach Anspruch 1 oder 2, **dadurch gekennzeichnet,**
**daß** in der Aufnahme eine Ringdichtung (12) angeordnet ist.

4. Wellrohr nach Anspruch 1 und 3, **dadurch gekennzeichnet**
**daß** die Ringdichtung (12) an ihrer Innenseite einen der Nut (11) im Querschnitt angepaßten, ringförmig umlaufenden inneren Haltesteg (13) aufweist.

5. Wellrohr nach Anspruch 4, **dadurch gekennzeichnet,**
**daß** die Ringdichtung (12) einen beiderseits des Haltesteges (13) mit Innen-Dichtflächen (15, 16) an dem Außenwand-Abschnitt (7) anliegenden, radial nach außen von dem Außenwand-Abschnitt (7) vorragenden Dichtungs-Abschnitt (14) aufweist.

6. Kombination eines Kunststoff-Wellrohres nach Anspruch 3 mit einer Muffe (18), die eine im wesentlichen zylindrische Innenfläche (24, 25) aufweist, **dadurch gekennzeichnet,**
**daß** zwischen der Innenfläche (24, 25) der Muffe (18) und dem mindestens einen mit einer Ringdichtung (12) versehenen Außenwand-Abschnitt (7) ein Ringspalt (27) ausgebildet ist, dessen Spaltweite s klein ist.

7. Kombination nach Anspruch 6, **dadurch gekennzeichnet,**
**daß** der Dichtungs-Abschnitt (14) mit einer Außen-Dichtfläche (26) an der Innenfläche (24, 25) anliegt.

## Claims

1. Corrugated plastic pipe, in particular corrugated twin-wall pipe, the outside wall of which is provided with neighboring annular corrugations (5), which have approximately the cross-sectional shape of a trapezoid that tapers radially of the central longitudinal axis (10) and an approximately cylindrical outside wall section (7) and side wall sections (8, 9) that are contiguous thereto,
**characterized**
**in that** at least one receptacle, in the shape of an annularly encircling groove (11), for an annular seal (12) is formed in the outside wall sections (7).

2. Corrugated pipe according to claim 1, **characterized**
**in that** d ≥ 250 mm applies to the inside diameter d of the corrugated pipe.

3. Corrugated pipe according to claim 1 or 2, **characterized**
**in that** an annular seal (12) is disposed in the receptacle.

4. Corrugated pipe according to claim 1 and 3, **characterized**
**in that** the annular seal (12), on its inside, has an annularly encircling inner fixing rib (13) cross-sectionally suited to the groove (11).

5. Corrugated pipe according to claim 4, **characterized**
**in that** the annular seal (12) comprises a seal section (14) which, on both sides of the fixing rib (13), rests on the outside wall section (7) by interior sealing faces (15, 16) and projects radially outwards from the outside wall section (7).

6. Combination of a corrugated plastic pipe according to claim 3 with a socket (18) which has a substantially cylindrical interior surface (24, 25), **characterized**
**in that** an annular gap (27), the gap width s of which is small, is formed between the interior surface (24, 25) of the socket (18) and the at least one outside wall section (7) that is provided with an annular seal (12).

7. Combination according to claim 6, **characterized**
**in that** the seal section (14) rests on the interior surface (24, 25) by an exterior sealing surface (26).

## Revendications

1. Tuyau ondulé en matière plastique, en particulier tuyau ondulé composite, dont la paroi extérieure est pourvue d'ondulations annulaires voisines les unes des autres (5), qui présentent chacune sensiblement la section transversale d'un trapèze se rétrécissant radialement par rapport à l'axe médian longitudinal (10) et, à cet effet, une portion de paroi extérieure sensiblement cylindrique (7) et, s'y raccordant, des portions de parois latérales (8, 9), **caractérisé en ce qu'**au moins un logement conçu sous la forme d'une gorge périphérique annulaire (11) est ménagé dans les portions de paroi extérieure (7) pour un joint annulaire (12).

2. Tuyau ondulé selon la revendication 1, **caractérisé en ce que**, pour le diamètre intérieur d du tuyau ondulé, on a : d ≥ 250 mm.

3. Tuyau ondulé selon la revendication 1 ou 2, **caractérisé en ce qu'**un joint annulaire (12) est disposé dans le logement.

4. Tuyau ondulé selon les revendications 1 et 3, **caractérisé en ce que** le joint annulaire (12) comporte, sur son côté intérieur, une nervure de retenue intérieure périphérique annulaire (13) dont la section transversale est adaptée à celle de la gorge (11).

5. Tuyau ondulé selon la revendication 4, **caractérisé en ce que** le joint annulaire (12) comporte une portion d'étanchéité (14) qui fait saillie radialement vers l'extérieur à partir de la portion de paroi extérieure (7) et qui, de part et d'autre de la nervure de retenue (13), est appliquée contre la portion de paroi extérieure (7) par l'intermédiaire de surfaces intérieures d'étanchéité (15, 16).

6. Combinaison d'un tuyau ondulé en matière plastique selon la revendication 3 avec un manchon (18) qui présente une surface intérieure sensiblement cylindrique (24, 25), **caractérisée en ce qu'**entre la surface intérieure (24, 25) du manchon (18) et la portion de paroi extérieure (7), au nombre d'au moins une, garnie d'un joint annulaire (12), est ménagé un interstice annulaire (27) dont la largeur d'interstice s est faible.

7. Combinaison selon la revendication 6, **caractérisée en ce que** la portion d'étanchéité (14) est appliquée contre la surface intérieure (24, 25) par l'intermédiaire d'une surface d'étanchéité extérieure (26).
